# EUROPEAN PATENT SPECIFICATION

(11) **EP 2 050 991 B1**
(45) Date of publication and mention of the grant of the patent: **16.12.2009**
(21) Application number: 07425656.1
(22) Date of filing: 18.10.2007
(51) Int. Cl.: F16K 7/02, F16K 15/14, G05D 7/01

(54) **Pressure-compensated flow rate control valve and testing machine comprising said valve**
Druckausgeglichenes Durchfluss-Steuerventil und Testanordnung mit solch einem Ventil
Soupape régulatrice de débit à pression égalisée et ensemble de test comprenant une telle soupape

(43) Date of publication of application: 22.04.2009
(73) Proprietor: Mecpart S.r.l., 41100 Modena (IT)
(72) Inventor: Mambrini, Mario, 42100 Reggio Emilia (IT)
(74) Representative: Guareschi, Antonella

(56) References cited:
- DE-A1- 2 131 117
- DE-C- 514 132
- US-A- 2 781 060
- US-A- 3 815 636

## Description

The invention relates to the field of flow-control valves used specifically, though not exclusively, in the control of hydraulic test machines. In particular, the invention is applicable in the control of machines destined to perform static controls.

As is known, test machines are used to determine the mechanical resistance properties of materials in the form of samples, structures or models. These machines enable application of a variable force according to a previously known law, and record the mechanical behaviour of the element under examination. In the example, hydraulic machines exploit hydraulic jacks to generate the forces.

In general terms, static testing serves to determine the final resistance; the procedure consists in applying a progressively increasing force to the sample according to a predefined gradient, up until the sample piece breaks. During the course of the examination, a dynamometer continuously records the load developed by the machine and notes the peak preceding the collapse of the material.

More complex testing also requires measuring deformations, closed control of the deformation, and determination of elastic and plastic parameters.

In any case, the problem of control, which is resolved by acting on the pressure of operating fluid in the jack, is particularly critical in consideration of the high operating pressures (which can go above 700 bar) and the extreme accuracy required. The most widely-used solution involves the use of an electrically-controlled valve arranged downstream of a hydraulic control panel for operating fluid pumping and upstream of the actuating jack. The control panel compresses the fluid to a predetermined pressure and the valve discharges the excess flow so as to regulate the fluid pressure internally of the jack.

The regulating devices can be servo valves, proportional valves, manual or motorised flow manuals.

Each of the typologies exhibits associated advantages and defects in a particular application: servo valves favour precision at the cost of economy and operating pressures; proportional valves place economy and resistance before precision; flow valves can be precise, economic and resistant, but respond slowly to the transitory commands.

Independently of the type of valve; the above-described regulation system is characterised by continuous functioning of the hydraulic pumping station, which is forced to move and compress volumes of fluids which will then be partially discharged. This constitutes a waste of energy, and also leads to rapid wear and production of heat and noise.

An alternative solution to the above-delineated control problem involves the use of a variable-flow pump.

This can be constituted by a variable-speed motor associated to a fixed-capacity positive displacement pump. The group obtained this way is used to compress the operating fluid with a flow that depends on the rotating speed of the motor.

The hydraulic regulation valve is in fact eliminated, re-routing the command onto the electronic device associated to the motor.

This enables some of the above-described technical problems to be obviated.

The problem invoked originates from the excellent performance, even at low velocities, of the piston pumps, indispensable for producing high pressures. The absence of losses signifies the irreversibility of the operating fluid compression sent to the hydraulic jack. During a retroactive piloting test, each error in excess between the real instantaneous load and the calculated theoretical load produces the arresting of the motor and therefore a constant-load stasis; restarting is done when the error becomes negative, i.e. when the theoretical ramp exceeds the real value.

The process tends to assume a cyclic progression, in rough terms replicating the development of the predefined theoretical progression.

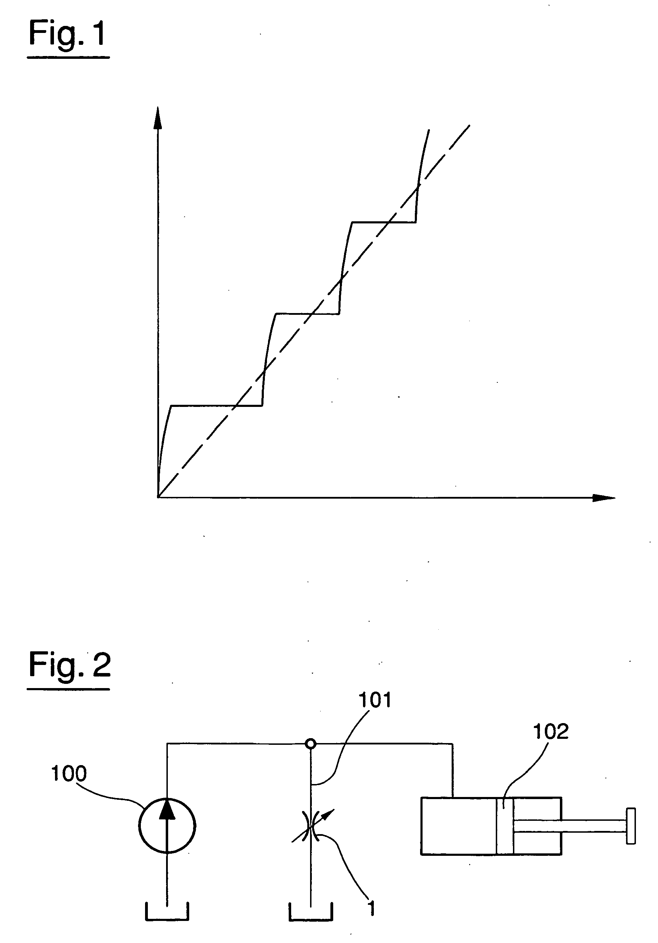

Figure 1 of the drawings translates this behaviour into a load/time graph: the broken line represents the objective of the retroaction, while the continuous line gives the machine response.

In order to improve the performance of the indirect control system, a part of the operating fluid has to be discharged through an alternative conduit to the one connected to the jack. Also for control needs, the fluid flow rate crossing the alternative conduit must be previously known, possibly constant and independent of the fluid pressure itself. Consequently, the fluid flow rate in inlet in the alternative conduit must be specially regulated by a pressure-compensated flow regulating valve. This constructional solution is schematically represented in figure 2 of the accompanying drawings, in which the flow-regulating valve is denoted by number 1. The means for pumping constituted by the regulatable pump, the auxiliary branch defined by the alternative conduit and the hydraulic jack are respectively denoted by numbers 100, 101 and 102.

Known flow-rate regulating valves, however, are not suitable for an application such as the one described above. These valves are either characterised by a constructional complexity which is such as to render them unsuitable for use with high-pressure fluids, or they do not guarantee a sufficient level of precision. Document US 2 781 060 discloses a known flow-rate regulating valve which is not suitable to work with high pressure fluids.

Another flow-rate regulator valve is known from document US-A-3 815 636.

The main aim of the present invention is such as to provide a flow-regulating valve which is suitable for use in a control system of testing machines such as the system described herein above.

An advantage of the valve of the invention is its constructional simplicity, from which derive good mechanical resistance and a contained production cost. The mechanical resistance of the valve enables it to be used in the presence of large pressure drops.

A further advantage of the valve of the invention relates to the high precision thereof, caused by the absence of reciprocating sliding parts and the consequent first-detachment friction events. A further advantage of the valve of the invention relates to the great ease of calibrating of the device by the operator.

The characteristics and advantages of the invention are illustrated in greater detail in the description which follows and the accompanying figures of the drawings.

The figures of the drawings, which are provided by means of non-limiting example, comprise:
figure 1, previously mentioned, which shows the temporal progress of the stress applied on the test material during the course of a static test by means of a hydraulic jack activated by the controlled-flow pump (unbroken line) and the theoretical load ramp fixed for the test (broken line);
figure 2, previously mentioned, which shows the hydraulic diagram of a test machine comprising a flow-regulating valve according to the invention;
figure 3, which is a section view of a flow-regulating valve according to the invention;
figure 4, which shows a section of the flow-regulating valve of figure 3 following the elastic deformation produced by a high pressure-drop across the valve;
figure 5 which shows an exploded perspective view of the flow-regulating valve of figures 3 or 4.

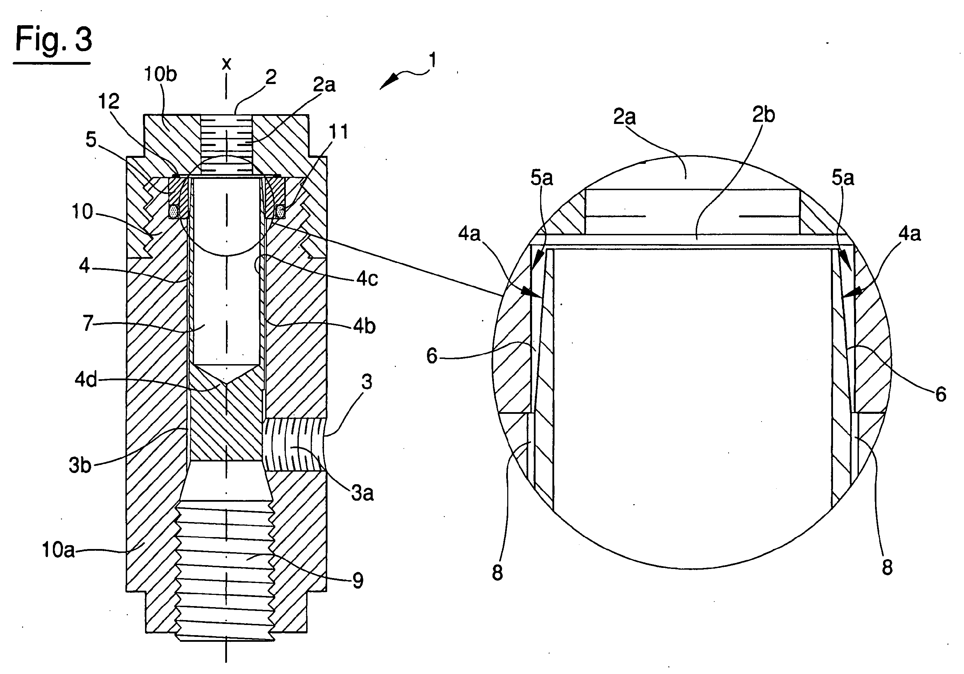

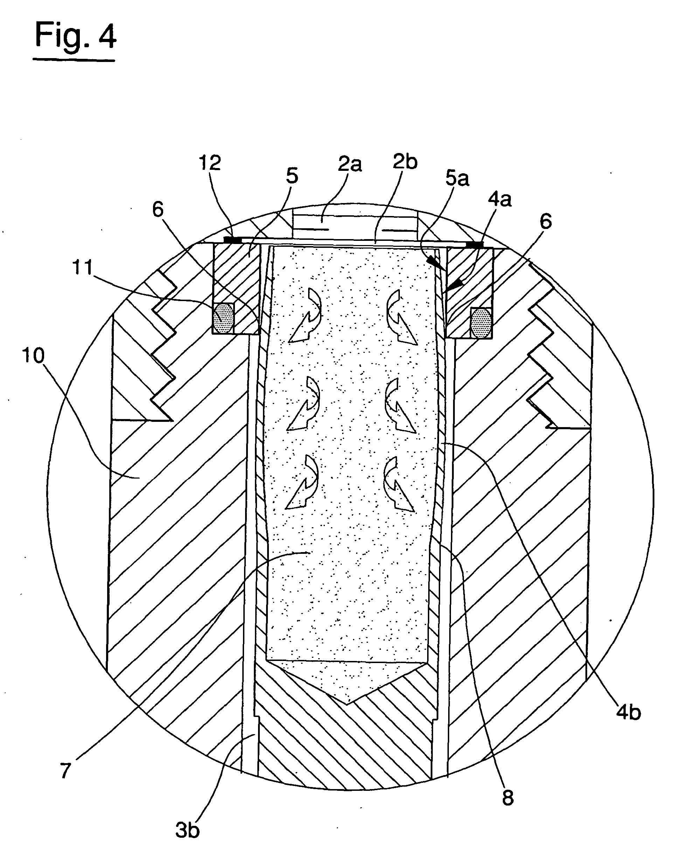

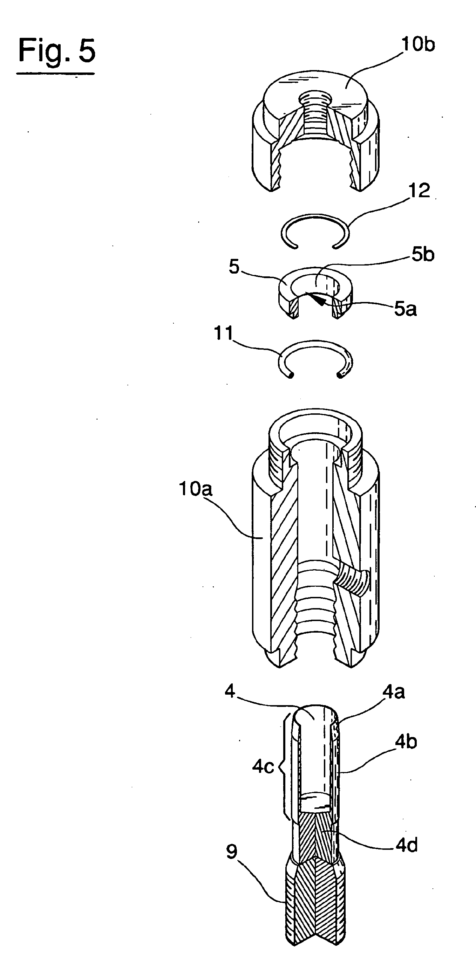

With reference to the figures of the drawings, 1 denotes in its entirety a pressure-compensated flow-regulating valve according to the invention. In the present description the valve is described with reference to the configuration illustrated in figures 3, 4 and 5, in which the development axis x is vertical. However, a different orientation of the valve does not influence correct functioning thereof. Positional relations between the elements described in terms of relative heights (such as, for example, the use of terms such as lower or upper) are to be interpreted with reference to the illustrated configuration.

The flow-regulating valve 1 of the invention comprises a valve body 10, which exhibits at least an inlet mouth 2, at least an outlet mouth 3 and an internal conduit 2a, 2b, 6, 8, 3a, 3b connecting the inlet mouth 2 and the outlet mouth 3. The valve 1 further comprises an obturator 4, which exhibits at least a first throttle surface 4a and at least a seating 5 exhibiting in turn a second throttle surface 5a. The throttle surfaces 4a, 5a are opposite and together define an outflow hole 6 arranged along the internal conduit 2a, 2b, 6, 8, 3a, 3b and predisposed to reduce the fluid flow rate crossing the conduit. The first throttle surface 4a is mobile on varying the pressure difference of the fluid through the outflow hole 6 (i.e. on varying the pressure fall through the valve) such as to modify at least a section of the outflow hole 6 by adapting it to the pressure difference, consequently operating a regulation of the fluid flow rate through the device. The flow-regulating valve 1 of the invention is different from known valves because the obturator 4 itself comprises at least a deformable wall 4b for regulating the above-described fluid flow-rate. The deformable wall 4b is interposed between a first cavity 7 in direct fluid communication with the inlet mouth 2 and a second cavity 8 in direct fluid communication with the outlet mouth 3. By cavity in direct fluid communication with a mouth of the valve, reference is made to a cavity arranged with respect to the mouth such that at least a possible fluid pathway from the mouth to the cavity does not cross the outflow hole 6. The difference of pressure in the fluid contained in the two cavities 7, 8, which given the direct communication between cavities and mouths corresponds to the pressure drop across the valve, determines a deformation of the deformable wall 4b and a consequent displacement of the first throttle surface 4a, enabling the fluid flow rate to be regulated.

In the illustrated example, when there is a difference in fluid pressure across the outflow hole 6, at least a portion of the obturator 4 exhibiting the throttle surface 4a expands radially to modify at least a section of the outflow hole 6.

In the preferred embodiment, illustrated in the accompanying figures of the drawings from 3 to 5, the obturator 4 of the valve 1 comprises a tubular element 4c having a longitudinal axis x and the deformable wall 4b is constituted by the lateral walls of the tubular element 4c. The tubular conformation of the obturator is a particularly advantageous embodiment; it enables obtaining a structurally simple valve by exploiting the dilations and narrowings of a tube subjected to a pressure differential in order to determine the radial displacements of the obturator 4 and the first throttle surface 4a thereof.

In the illustrated embodiment, the tubular element 4c exhibits a blind end 4d. The first throttle surface 4a, as previously defined, is constituted by a portion of the external surface of the tubular element 4c arranged at the end of the tubular element 4c which is opposite the blind end 4d. The blind end 4d of the tubular element 4c is associated by resting constraint to the valve body 10; the opposite end is free in order to enable radial deformation of the element at the first throttling surface 4a. The seating 5 exhibits a hole 5b; the second throttle surface 5a is advantageously the internal surface of the hole 5b and surrounds the first throttle surface 4a. The two throttle surfaces 4a, 5a are thus two concentric and opposite cylindrical surfaces. The space between them is the outflow hole 6.

The first and second throttle surfaces 4a, 5a are preferably inclined to one another such that the minimum section of the outflow hole 6 can be modified by operating a relative translation between the two surfaces with respect to the longitudinal axis x of the tubular element 4c. The valve therefore comprises means for relative translation of seating 5 and tubular element 4c with respect to the longitudinal axis x, for enabling a regulation of the minimum section of the outflow hole 6. It is important to stress how, in consideration of the limited longitudinal extension of the outflow hole 6, the fall of pressure through the hole 6 is substantially a function of only the minimum section: a regulation of the minimum section thus enables a satisfactory calibration of the flow crossing the device.

In the embodiment illustrated in the figures of the drawings, the relative inclination between the throttling surfaces 4a, 5a is due to a tapering of the tubular elements 4c at the end thereof corresponding to the first throttling surface 4a.

The means for relatively translating the seating 5 and the tubular element 4c with respect to the longitudinal axis x comprise, in the preferred embodiment, a regulating screw 9 which the obturator 4 rests on and which is associated via a threaded connection to the valve body 10.

In the preferred embodiment, the flow-regulating valve 1 is composed of the valve body 10 internally of which the obturator 4 and the seating 5 are contained. The valve body 10 comprises a main support 10a and a sealing cover 10b associated thereto.

The main support 10a comprises an upper central recess, preferably cylindrical. The central recess comprises two concentric portions having different diameter, the larger-diameter upper portion housing a cylindrical ring which constitutes the seating 5. The transition between the two portions of the central recess of different diameters defines an abutment which inferiorly constrains the cylindrical ring. The seating 5 is sealedly associated to the inside of the central recess, including by use of a first seal 11 interposed between the associated elements.

The internal surface of the hole 5b, which in the present embodiment corresponds to the second throttle surface 5a, defines, together with the surface of the lower section of the central recess, a conduit, internally of which the obturator 4 is housed. The diameter of the conduit is smaller at the second throttle 5a surface. The tubular element 4c is concentric with the hole 5b.

The sealing cover 10b is secured, preferably by means of a threaded connection, to the upper part of the main support 10a and superiorly constrains the seating 5. A second seal 12 is preferably interposed between the seating 5 and the sealing cover 10b.

The main support 10a inferiorly exhibits a threaded hole in communication with the above-described central recess. The regulating screw 9 is screwed into the threaded hole, which is superiorly in contact with the obturator 4. The obturator 4 is thus rested against the valve body 10 via the regulating screw 9 and the threading thereof. By operating on the accessible surface of the regulating screw 9, the screw can be rotated, resulting in a translation of the tubular element 10c and the first throttle surface 4a. As a consequence of the translation, the extension of the first throttle surface 4a opposite the second throttle surface 5a varies; as the first inclined surface is inclined, the variation determines an increase or a reduction in the minimum section of the outflow hole 6, enabling a flow regulation of the valve. The inlet mouth 2 opens superiorly on the sealing cover 10b, at the end of a short inlet conduit 2a. The mouth and the conduit are aligned along the longitudinal axis x of the tubular element 4c. The inlet conduit 2a opens on a connecting chamber 2b, peripherally delimited by the second gasket 12 and inferiorly delimited by the seating 5. The connecting chamber 2b communicates inferiorly both with the internal volume of the tubular element 3c, which defines the first cavity 7, and, via the outflow hole 6, with the second cavity 8. The second cavity 8 is a cylindrical crown comprised between the external surface of the tubular element 3c and the internal surface of the main support 10a. The second cavity 8 inferiorly communicates with an annular chamber 3b on which a lateral outlet conduit 3a opens, which lateral outlet conduit 3a radially crosses the main support 10a. The outlet conduit 3a opens into the outlet mouth 3.

During operation, the flow-regulating valve 1. is associated to a hydraulic conduit for which the flow rate is to be controlled independently with respect to the fall of pressure through the device. Using the regulating screw 9 it is possible, as described herein above, to define the minimum section of the passage hole 6 and thus determine the flow rate. In the operating condition, to the increase in pressure drop through the valve 1 corresponds an increase in the pressure differential between the cavities 7, 8 in direction communication with the inlet and outlet mouths 2, 3. This pressure difference induces a deformation of the deformable wall 4b of the obturator and a consequent expansion of the upper end of the obturator 4. The first throttle surface 4a consequently nears the second throttle surface 4b. The expansion of the obturator 4 restricts the outflow hole 4b, balancing the pressure increase and guaranteeing a stable flow rate through the device.

The flow-rate regulating valve 1, as described herein above, is advantageously applied in the control of hydraulic test machines. In particular, the present invention provides a hydraulic test machine comprising a flow-regulating valve 1 of the type described herein above. The test machine comprises the following known elements: a hydraulic circuit, means for pumping 100 an operating fluid internally of the hydraulic circuit, a hydraulic jack 102 arranged on a main branch of the hydraulic circuit and activated by the operating fluid, means for retroactively regulating the means for pumping 100.

Further, the hydraulic circuit is **characterised in that** it comprises a secondary discharge branch 101; the access of the fluid to the secondary discharge branch 101 is controlled by a pressure-compensated flow-regulating valve 1 of the type described herein above.

## Claims

1. A flow-rate regulator valve (1), comprising a valve body (10) which exhibits at least an inlet mouth (2), at least an outlet mouth (3) and an internal conduit (2a, 2b, 6, 8, 3a, 3b) connecting the inlet mouth (2) and the outlet mouth (3); an obturator (4) exhibiting at least a first throttle surface (4a), and at least a seating (5), which exhibits a second throttle surface (5a), the first throttle surface (4a) and the second throttle surface (5a) being opposite to one another, defining there-between an outflow hole (6) arranged along the internal conduit (2a, 2b, 6, 8, 3a, 3b) and predisposed to reduce the fluid flow-rate crossing the internal conduit (2a, 2b, 6, 8, 3a, 3b); the first throttle surface (4a) being mobile on a varying of the pressure difference of the fluid through the outflow hole (6) such as to change at least a section of the outflow hole (6), adapting the at least a section to the pressure difference, consequently operating a regulation of the fluid flow; the obturator (4) comprising at least a deformable wall (4b) interposed between a first cavity (7) which is in direct fluid communication with the inlet mouth (2) and a second cavity (8) which is in direct fluid communication with the outlet mouth (3), the first throttle surface (4a) being located at one end of the deformable wall (4b) such that the difference in fluid pressure contained in the first cavity (7) and the second cavity (8) determines a deformation of the deformable wall (4b) and a consequent displacement of the first throttle surface (4a), enabling the regulation of the fluid flow, the flow-rate regulator valve being **characterised in that** the two throttle surfaces (4a, 5a) are concentric and opposite cylindrical surfaces and the outflow hole (6) is of a continuous annular shape.

2. The flow-rate regulator valve of claim 1, **characterised in that** at a variation in the pressure difference of the fluid through the outflow hole (6), at least the first throttle surface (4a) expands radially to modify at least a section of the outflow hole (6).

3. The flow-rate regulator valve of claim 2, **characterised in that** the obturator (4) comprises a tubular element (4c), the deformable wall (4b) being constituted by the lateral walls of the tubular element (4c).

4. The flow-rate regulator valve of claim 3, **characterised in that** the tubular element (4c) exhibits a blind end (4d), the first throttle surface (4a) being constituted by a portion of the external surface of the tubular element (4c) arranged at the opposite end of the tubular element (4c), the seating (5) exhibiting a hole (5b), the second throttle surface (5a) being an internal surface of the hole (5b) and surrounding the first throttle surface (4a).

5. The flow-rate regulator valve of claim 4, **characterised in that** the first throttle surface (4a) and the second throttle surface (5a) are inclined with respect to one another such that a minimum section of the outflow hole (6) is variable, with a relative translation of the first throttle surface (4a) and the second throttle surface (5a) with respect to the longitudinal axis (x) of the tubular element (4c), the valve comprising means for relative translation of the seating (5) and the tubular element (4c) with respect to the longitudinal axis (x) in order to enable a regulation of the section of the outflow section (6).

6. The flow-rate regulator valve of claim 5, **characterised in that** the relative inclination between the first throttle surface (4a) and the second throttle surface (5a) is determined by a tapering of the tubular element (4c) at the end thereof corresponding to the first throttle surface (4a).

7. The flow-rate regulator valve of claim 5 or 6, **characterised in that** the means for relative translation of the seating (5) and the tubular element (4c) with respect to the longitudinal axis (x) comprise a regulating screw (9) on which the obturator rests (4), which regulating screw (9) is associated by a threaded connection to the valve body (10).

8. The flow-rate regulator valve of one of the preceding claims, **characterised in that** the valve body (10) comprises a main support (10a) which exhibits a central recess, to which central recess the obturator (4) and the seating (5) are internally associated, and to which central recess a sealing cover (10b) associated to the main support (10a) is also associated in order to superiorly constrain the seating (5) internally of the recess.

9. The flow-rate regulator valve of claim 8 when it depends on claim 7, **characterised in that** the main support (10a) inferiorly exhibits a threaded hole in communication with the central recess, the regulation screw (9) screwing into the threaded hole, the regulation screw (9) being superiorly in contact with the obturator (4).

10. A test machine comprising: a hydraulic circuit comprising a main branch, means for pumping (100) an operating fluid internally of the hydraulic circuit; a hydraulic jack (102) actuated by the operating fluid arranged on the main branch of the hydraulic circuit; means for retroactively regulating the means for pumping; **characterised in that** it further comprises a flow-rate regulator valve (1) as in any one of the preceding claims; the hydraulic circuit comprising a secondary branch (101) for discharge; access of the fluid to the secondary branch (101) being controlled by the flow-rate regulator valve (1).

## Patentansprüche

1. Durchflussregelventil (1) umfassend einen zumindest eine Eintrittsöffnung (2), zumindest eine Austrittsöffnung (3) und einen, die Eintrittsöffnung (2) mit der Austrittsöffnung (3) verbindenden inneren Kanal (2a, 2b, 6, 8, 3a, 3b) aufweisenden Ventilkörper (10); dabei weist ein Schieber (4) zumindest eine erste Drosselfläche (4a) und zumindest einen, eine zweite Drosselfläche (5a) aufweisenden Sitz (5) auf, wobei die erste Drosselfläche (4a) und die zweite Drosselfläche (5a) einander gegenüberliegen und zwischen sich eine Auslassöffnung (6) bilden, die entlang dem inneren Kanal (2a, 2b, 6, 8, 3a, 3b) angeordnet ist und dazu dient, den Strömungsdurchsatz durch den inneren Kanal (2a, 2b, 6, 8, 3a, 3b) zu vermindern; dabei ist die erste Drosselfläche (4a) bei Änderung des Druckunterschiedes des durch die Auslauföffnung (6) tretenden Fluids beweglich, wodurch zumindest ein Querschnitt der Auslauföffnung (6) verändert wird und der zumindest eine Querschnitt an die Druckdifferenz angepasst wird, so dass eine Regelung des Strömungsdurchsatzes erfolgt; wobei der Schieber (4) zumindest eine verformbare Wand (4b) umfasst, die zwischen einem ersten, unmittelbar mit der Eintrittsöffnung (2) hydraulisch kommunizierenden Hohlraum (7), und einem zweiten, unmittelbar mit der Austrittsöffnung (3) hydraulisch kommunizierenden Hohlraum (8) angeordnet ist, wobei die erste Drosselfläche (4a) an dem einen Ende der verformbaren Wand (4b) angeordnet ist, so dass der Unterschied zwischen dem in dem ersten Hohlraum (7) und dem in dem zweiten Hohlraum (8) herrschenden Fluiddruck eine Verformung der verformbaren Wand (4b) und ein entsprechendes Verfahren der ersten Drosselfläche (4a) bewirkt, wodurch eine Regelung des Strömungsdurchsatzes möglich wird, wobei das Durchflussregelventil **dadurch gekennzeichnet ist, dass** die beiden Drosselflächen (4a, 5a) konzentrische und gegensinnig zylindrisch ausgebildete Flächen sind und die Auslauflöffnung (6) eine durchgehende Ringform aufweist.

2. Durchflussregelventil nach Anspruch 1, **dadurch gekennzeichnet, dass** sich bei Änderung des Druckunterschiedes des durch die Auslauföffnung (6) tretenden Fluids zumindest die erste Drosselfläche (4a) radial ausdehnt, um zumindest einen Querschnitt der Auslauföffnung (6) zu verändern.

3. Durchflussregelventil nach Anspruch 2, **dadurch gekennzeichnet, dass** der Schieber (4) ein rohrförmiges Element (4c) umfasst, wobei die verformbare Wand (4b) aus den Seitenwänden des rohrförmigen Elementes (4c) besteht.

4. Durchflussregelventil nach Anspruch 3, **dadurch gekennzeichnet, dass** das rohrförmige Element (4c) ein geschlossenes Ende (4d) aufweist, wobei die erste Drosselfläche (4a) aus einem Bereich der äusseren Fläche des rohrförmigen Elementes (4c) besteht, der an dem gegenüberliegenden Ende des rohrförmigen Elementes (4c) angeordnet ist, wobei der Sitz (5) eine Bohrung (5b) aufweist und die zweite Drosselfläche (5a) eine innere Fläche der Bohrung (5b) ist und die erste Drosselfläche (4a) umfasst.

5. Durchflussregelventil nach Anspruch 4, **dadurch gekennzeichnet, dass** die erste Drosselfläche (4a) und die zweite Drosselfläche (5a) geneigt zueinander angeordnet sind, so dass ein Mindestquerschnitt der Auslauföffnung (6) veränderbar ist, wobei eine relative Verschiebung der ersten Drosselfläche (4a) und der zweiten Drosselfläche (5a) gegenüber der Längsachse (x) des rohrförmigen Elementes (4c) erfolgt, und das Ventil Mittel zum relativen Verschieben des Sitzes (5) und des rohrförmigen Elementes (4c) gegenüber der Längsachse (x) umfasst, um eine Querschnittsregelung der Auslauföffnung (6) zu ermöglichen.

6. Durchflussregelventil nach Anspruch 5, **dadurch gekennzeichnet, dass** die relative Neigung zwischen der ersten Drosselfläche (4a) und der zweiten Drosselfläche (5a) durch Verjüngen des rohrförmigen Elementes (4c) an seinem der ersten Drosselfläche (4a) entsprechenden Ende bewirkt wird.

7. Durchflussregelventil nach Anspruch 5 oder 6, **dadurch gekennzeichnet, dass** die Mittel zum relativen Verschieben des Sitzes (5) und des rohrförmigen Elementes (4c) gegenüber der Längsachse (x) eine Stellschraube (9) umfassen, an der sich der Schieber (4) abstützt, welche Stellschraube (9) über eine Gewindeverbindung dem Ventilkörper (10) zugeordnet ist.

8. Durchflussregelventil nach einem der vorhergehenden Ansprüche, **dadurch gekennzeichnet, dass** der Ventilkörper (10) ein eine mittige Aussparung umfassendes Hauptlager (10a) umfasst, welcher mittigen Aussparung der Schieber (4) und der Sitz (5) innenseitig zugeordnet sind und welcher mittigen Aussparung ferner ein dem Hauptlager (10a) zugeordneter Dichtungsdeckel (10b) zugeordnet ist, um den Sitz (5) oberseitig in der Aussparung zu halten.

9. Durchflussregelventil nach Anspruch 8 insofern, als sich dieser auf Anspruch 7 bezieht, **dadurch gekennzeichnet, dass** das Hauptlager (10a) unterseitig eine Gewindebohrung aufweist, die mit der mittigen Aussparung kommuniziert, wobei die Stellschraube (9) in die Gewindebohrung eingeschraubt ist und die Stellschraube (9) oberseitig den Schieber (4) berührt.

10. Testmaschine umfassend: einen Hydraulikkreislauf umfassend einen Hauptzweig, Mittel zum Pumpen (100) eines Betriebsfluids innerhalb des Hydraulikkreislaufes; eine hydraulische Winde (102), die von dem Betriebsfluid betätigt wird und in dem Hauptzweig des Hydraulikkreislaufes angeordnet ist; Mittel zur rückwirkenden Regelung der Mittel zum Pumpen; **dadurch gekennzeichnet, dass** die Testmaschine ferner ein Durchflussregelventil (1) nach einem der vorhergehenden Ansprüche umfasst; dabei weist der Hydraulikkreislauf einen Nebenzweig (101) zum Ablassen auf; der Fluidzugang zu dem Nebenzweig (101) wird von dem Durchflussregelventil (1) gesteuert.

## Revendications

1. Valve de régulation du débit (1), comprenant un corps de valve (10) présentant au moins un orifice d'entrée (2), au moins un orifice de sortie (3) et un conduit interne (2a, 2b, 6, 8, 3a, 3b) reliant l'orifice d'entrée (2) et l'orifice de sortie (3); un obturateur (4) présentant au moins une première surface d'étranglement (4a), et au moins un siège (5), qui présente une seconde surface d'étranglement (5a), la première surface d'étranglement (4a) et la seconde surface d'étranglement (5a) étant opposées l'une à l'autre, définissant entre elles un orifice d'écoulement (6) disposé le long du conduit interne (2a, 2b, 6, 8, 3a, 3b) et prédisposé pour réduire le débit de fluide traversant le conduit interne (2a, 2b, 6, 8, 3a, 3b); la première surface d'étranglement (4a) étant mobile lors d'une variation de la différence de pression du fluide au travers de l'orifice d'écoulement (6) de manière à changer au moins une section de l'orifice d'écoulement (6), en adaptant l'au moins une section à la différence de pression, en opérant en conséquence une régulation du débit; l'obturateur (4) comprenant au moins une paroi déformable (4b) interposée entre une première cavité (7) qui est en communication directe avec l'orifice d'entrée (2) et une seconde cavité (8) en communication directe avec l'orifice de sortie (3), la première surface d'étranglement (4a) étant située en correspondance d'une extrémité de la paroi déformable (4b) de telle manière que la différence dans la pression du fluide contenue dans la première cavité (7) et la seconde cavité (8) détermine une déformation de la paroi déformable (4b) et un conséquent déplacement de la première surface d'étranglement (4a), en permettant la régulation du débit, la valve de régulation du débit étant **caractérisée en ce que** les deux surfaces d'étranglement (4a, 5a) sont des surfaces cylindriques concentriques et opposées et que l'orifice d'écoulement (6) est de forme annulaire continue.

2. Valve de régulation du débit selon la revendication 1, **caractérisée en ce que**, lors d'une variation de la différence de pression du fluide au travers de l'orifice d'écoulement (6), au moins la première surface d'étranglement (4a) se dilate radialement pour modifier au moins une section de l'orifice d'écoulement (6).

3. Valve de régulation du débit selon la revendication 2, **caractérisée en ce que** l'obturateur (4) comprend un élément tubulaire (4c), la paroi déformable (4b) étant constituée par les parois latérales de l'élément tubulaire (4c).

4. Valve de régulation du débit selon la revendication 3, **caractérisée en ce que** l'élément tubulaire (4c) présente une extrémité fermée (4d), la première surface d'étranglement (4a) étant constituée d'une portion de la surface externe de l'élément tubulaire (4c) disposée en correspondance de l'extrémité opposée de l'élément tubulaire (4c), le siège (5) présentant un orifice (5b), la seconde surface d'étranglement (5a) étant une surface interne de l'orifice (5b) et entourant la première surface d'étranglement (4a).

5. Valve de régulation du débit selon la revendication 4, **caractérisée en ce que** la première surface d'étranglement (4a) et la seconde surface d'étranglement (5a) sont inclinées l'une par rapport à l'autre de manière à ce qu'une section minimum de l'orifice d'écoulement (6) soit variable, avec une relative translation de la première surface d'étranglement (4a) et de la seconde surface d'étranglement (5a) par rapport à l'axe longitudinal (x) de l'élément tubulaire (4c), la valve comprenant des moyens de translation relative du siège (5) et de l'élément tubulaire (4c) par rapport à l'axe longitudinal (x) de manière à permettre une régulation de la section de l'orifice d'écoulement (6).

6. Valve de régulation du débit selon la revendication 5, **caractérisée en ce que** l'inclinaison relative entre la première surface d'étranglement (4a) et la seconde surface d'étranglement (5a) est déterminée par un biaisement de l'élément tubulaire (4c) en correspondance de son extrémité correspondant à la première surface d'étranglement (4a).

7. Valve de régulation du débit selon la revendication 5 ou 6, **caractérisée en ce que** les moyens de translation relative du siège (5) et de l'élément tubulaire (4c) par rapport à l'axe longitudinal (x) comprennent une vis de régulation (9) sur laquelle repose l'obturateur (4), laquelle vis de régulation (9) étant associée par une liaison filetée au corps de la valve (10).

8. Valve de régulation du débit selon l'une des revendications précédentes, **caractérisée en ce que** le corps de valve (10) comprend un support principal (10a) présentant un renfoncement central, auquel sont intérieurement associés l'obturateur (4) et le siège (5), et auquel est associé un capuchon d'étanchéité (10b) associé au support principal (10a) de manière à maintenir supérieurement le siège (5) à l'intérieur du renfoncement.

9. Valve de régulation du débit selon la revendication 8 lorsqu'elle dépend de la revendication 7, **caractérisée en ce que** le support principal (10a) présente intérieurement un orifice taraudé en communication avec le renfoncement central, la vis de régulation (9) se vissant dans l'orifice taraudé, la vis de régulation (9) étant supérieurement en contact avec l'obturateur (4).

10. Machine d'essai comprenant: un circuit hydraulique comprenant une branche principale, des moyens de pompage (100) d'un fluide opérationnel à l'intérieur du circuit hydraulique; un vérin hydraulique (102) actionné par le fluide opérationnel disposé sur la branche principale du circuit hydraulique; des moyens de régulation rétroactive des moyens de pompage; **caractérisée en ce qu'**elle comprend de plus une valve de régulation du débit (1) comme dans l'une quelconque des revendications précédentes; le circuit hydraulique comprenant une branche secondaire (101) pour l'échappement; l'accès du fluide à la branche secondaire (101) étant contrôlé par la valve de régulation du débit (1).
